# EUROPÄISCHE PATENTSCHRIFT

(11) **EP 3 562 635 B1**
(45) Veröffentlichungstag und Bekanntmachung des Hinweises auf die Patenterteilung: **15.06.2022**
(21) Anmeldenummer: 17847764.2
(22) Anmeldetag: 31.12.2017
(51) Int. Cl.: B27C 3/04, B27C 9/04, B25J 11/00, B23B 39/16, H02K 5/20

(54) **MULTIFUNKTIONSEINHEIT**
MULTIFUNCTION UNIT
UNITÉ MULTIFONCTIONNELLE

(30) Priorität: 31.12.2016 DE 102016015583; 30.12.2017 DE 102017012076
(43) Veröffentlichungstag der Anmeldung: 06.11.2019
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2017/000435
(87) Internationale Veröffentlichungsnummer: WO 2018/121807

(56) Entgegenhaltungen:
- EP-A1- 0 434 845
- EP-A1- 2 199 044
- EP-A1- 2 272 643
- EP-A1- 2 371 502
- EP-A1- 2 743 047
- EP-A1- 2 946 864
- WO-A2-2009/021498
- WO-A2-2011/083102
- DE-A1- 19 636 166
- DE-A1-102008 058 747
- DE-A1-102011 079 463
- DE-C- 194 305
- DE-U1-202005 006 909
- US-A- 4 955 119
- US-A1- 2005 151 431

## Beschreibung

Die Erfindung betrifft eine Multifunktionseinheit gemäß dem Oberbegriff des Patentanspruchs 1, bestehend aus einer Vielzahl von in einem Grundkörper eingebauten angetriebenen Werkzeugen mit mindestens einem zentralen Antrieb, wobei sich die Werkzeuge im Grundkörper entweder in einer eingefahrenen Parkposition oder in einer ausgefahrenen Arbeitsposition befinden.

Aus der DE 102 59 285 A1 ist ein solches modulartiges Spindelaggregat bekannt, mit dessen Hilfe plattenförmige Werkstücke bearbeitet werden können. Im Gehäuse des Aggregats sind mehrere gleichartige Spindeln parallel zueinander angeordnet. Die einzelnen Spindeln sind im Gehäuse axial aus- und einfahrbar gelagert.

Der vorliegenden Erfindung liegt die Problemstellung zugrunde, eine angetriebene Multifunktionseinheit zum trennenden und/oder fügenden Bearbeiten und/oder Handhaben für einfache Werkzeugwechsel zu entwickeln, die im 3-dimensionalen Raum frei bewegbar ist, um platten- und/oder brettartige Werkstücke mit verschiedenen Werkzeugen zu bearbeiten.

Diese Problemstellung wird mit den Merkmalen des Hauptanspruchs gelöst. Dabei stellen die Werkzeuge verschiedene Typen für trennende und fügende Fertigungsverfahren dar. Von jedem Werkzeugtyp sind ein oder mehrere Werkzeuge vorhanden. Mehrere Werkzeuge - zu einer Gruppe mechanisch oder softwaretechnisch zusammengefasst - sind zeitgleich in eine Arbeitsposition bringbar. Der Grundkörper weist einen grundkörpereigenen Adapter auf, über den die Massenkräfte der Multifunktionseinheit abgestützt sind und über den mindestens die Energie und die Datenkommunikation übertragbar ist.

Als fügende Werkzeuge können neben Niederhaltern, Andruckstempeln und Andruckleisten auch ausfahrbare Greifer in der Multifunktionseinheit integriert sein. Letztere können beispielsweise Holzdübel in entsprechende Bohrungen der Werkstücke einpressen. Die Multifunktionseinheit nimmt dazu mit Hilfe des oder der Greifer in speziellen Übergabestellen einen oder mehrere Holzdübel auf.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht der Bearbeitungsstation von vorn;
- Figur 2:: perspektivische Ansicht der Werkzeugseite einer Multifunktionseinheit;
- Figur 3:: Draufsicht auf die Werkzeugseite zu Figur 2;
- Figur 4:: Schnitt durch den Getriebezug zu Figur 2;
- Figur 5:: perspektivische Draufsicht einer Multifunktionseinheit mit ungekuppelter Schnittstelle;
- Figur 6:: perspektivische Unteransicht einer Multifunktionseinheit mit ungekuppelter Schnittstelle;
- Figur 7:: Schnitt durch die Multifunktionseinheit nach Figur 8 auf der Höhe des Antriebsmotors;
- Figur 8:: perspektivische Ansicht einer Multifunktionseinheit mit langen Andrückleisten,

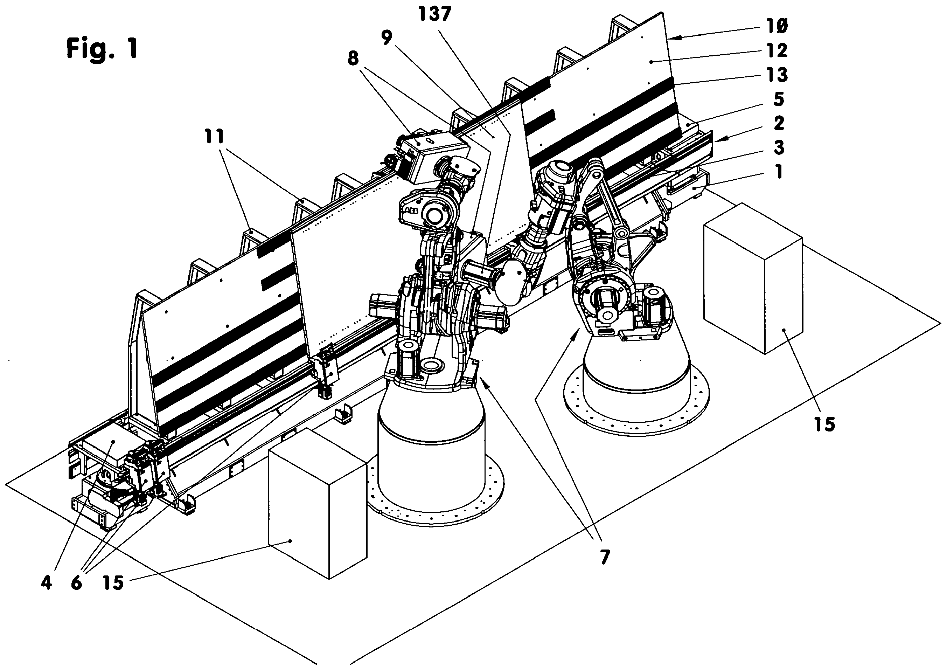

Die Figur 1 zeigt eine Bearbeitungsstation zum Bearbeiten von platten und/oder brettartigen Werkstücken. Dazu hat die Bearbeitungsstation ein geradliniges langgestrecktes Maschinenbett, auf dem ein Werkstückstützgatter aufgebaut ist. Um das Werkstückstützgatter herum befindet sich ein Werkstücktransportsystem. Letzteres besteht aus zwei parallelen Schienen, die jeweils endseitig vor Drehscheiben enden. Auf den vor dem Werkstückstützgatter gelegenen Schienen bewegen sich - ggf. zu Gruppen zusammengefasste - selbstfahrende Werkstückwagen, die die Werkstücke entlang dem Werkstückstützgatter transportieren.

Das Werkstückstützgatter dient zur Anlage der platten- oder brettförmigen Werkstücke, die beispielsweise aus nichtmetallischen Werkstoffen wie Holz, Spanplatten, Gipskartonagen, Faserzement oder dergleichen gefertigt sind. Zu diesen Werkstoffen zählen auch Verbundwerkstoffe ohne größeren Metallanteil.

Gegenüber dem Werkstückstützgatter und jenseits des Werkstücks sind z.B. zwei Handhabungsgeräte angeordnet, die jeweils eine Multifunktionseinheit tragen und führen. Die Handhabungsgeräte sind hier beispielsweise Gelenkroboter mit einer sogenannten RRR-Kinematik. Jede Multifunktionseinheit weist eine Vielzahl gleichartiger und/oder verschiedener Werkzeuge auf, mit denen in das jeweilige Werkstück (9) Bohrungen, Ausnehmungen, Schlitze und dergleichen eingearbeitet werden können. Dazu werden die für einen Bearbeitungsschritt erforderlichen Werkzeuge, zum Beispiel eine Gruppe von vier Bohrern, pneumatischen aus der Multifunktionseinheit (8) ausgefahren, verriegelt und in Rotation versetzt. Mit rotierenden Bohrern wird nun die Multifunktionseinheit in eine vorgewählte Position vor dem Werkstück positioniert und ab dort geradlinig mittels des Handhabungsgeräts (7) gegen das Werkstück verfahren, um die erforderliche Lochreihe zu fertigen. Am Ende des Bohrvorganges wird die Multifunktionseinheit zurückgezogen. Zugleich werden die aktiven Bohrer unter Abschaltung ihrer Rotationsbewegung wieder eingefahren. Die Multifunktionseinheit ist in allen sechs Freiheitsgraden innerhalb des Bearbeitungsraumes frei bewegbar.

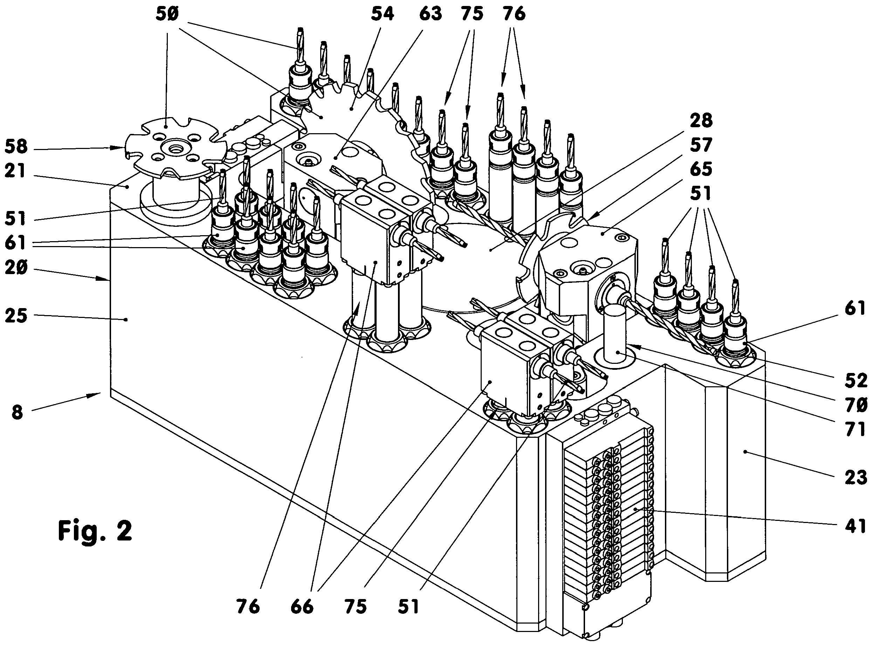

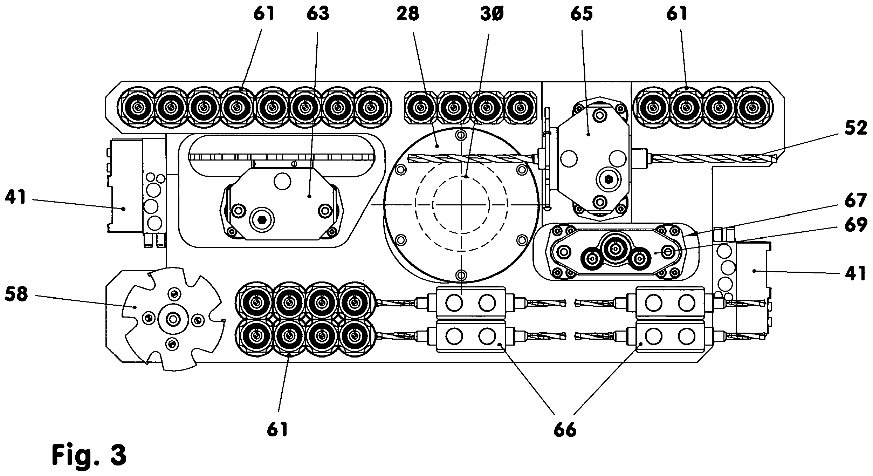

Die Figuren 2 und 3 zeigen eine Multifunktionseinheit von außen. Die Multifunktionseinheit (8) hat einen Grundkörper (20), der im Wesentlichen die Form eines langgestreckten Quaders hat, der zwei lange parallele Seitenwände und zwei erheblich kleinere Stirnseiten aufweist. Die Seitenwände und die Stirnseiten umschließen eine Frontseite, die eine sogenannte werkzeugtragende Werkzeugseite (21) dargestellt. Auf der Rückseite der Multifunktionseinheit (8) befindet sich eine zur Werkzeugseite z.B. parallele Adapterseite (22). Im mittleren Bereich des Grundkörpers (20) befindet sich unter einem Deckel (28) ein elektrischer Antriebsmotor, z.B. ein Servomotor. Nach Figur 3 weist die linke Stirnseite eine vertikale Nut auf, während die rechte Stirnseite bereichsweise zurückgesetzt ist. In der Nut und in dem zurückgesetzten Bereich sind jeweils Ventilblocks (41) angeordnet. Die jeweilige Tiefe der Nut und des zurückgesetzten Bereichs entsprechen der Höhe der Ventilblocks (41).

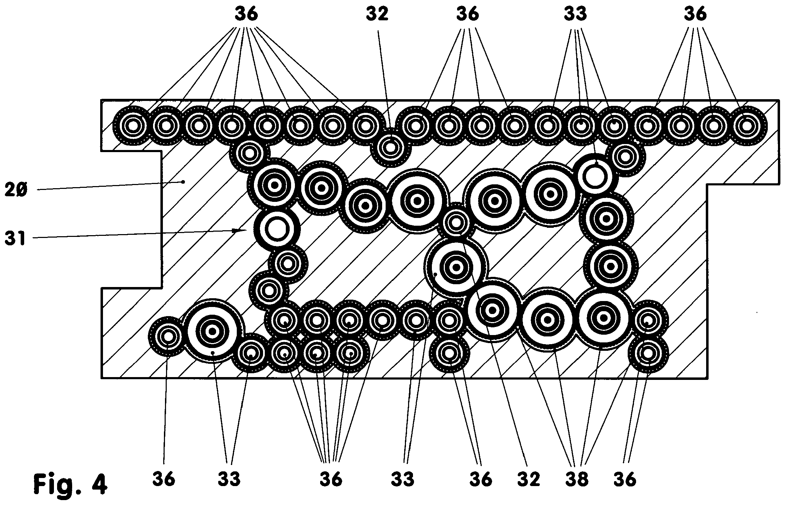

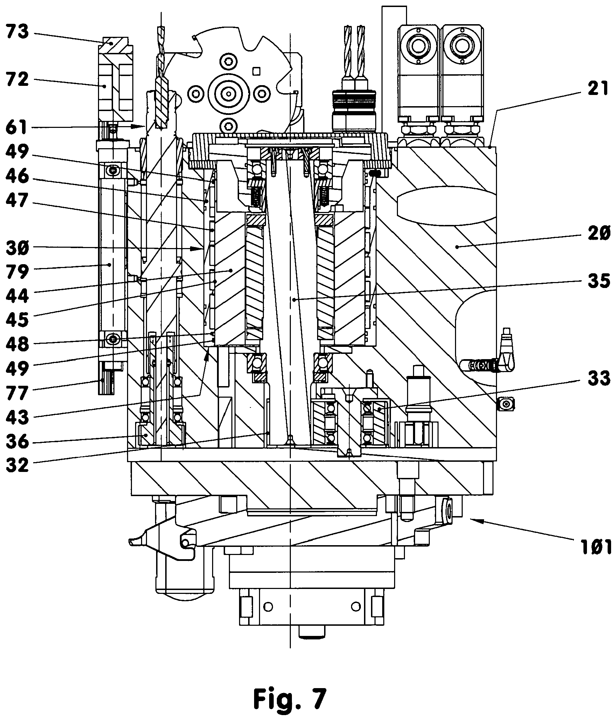

Der Servomotor (30), der ggf. über ein Kühlsystem (46-47) verfügt, ist im Grundkörper (20) so eingebaut, dass seine Antriebswelle (35) nach unten zeigt. Im unteren Bereich des Grundkörpers (20) kämmt ein auf der Antriebswelle (35) des Servomotors (30) sitzendes Hauptantriebsrad (32) mit einem Getriebe, das aus einer Vielzahl von Stirnrädern (32-36) besteht, vgl. Figuren 4 und 7. Die Figur 4 zeigt einen Schnitt durch den Grundkörper (20) bzw. den Getriebezug, der parallel zur Adapterseite (22) ausgerichtet ist. Das Antriebsrad (32) kämmt mit drei größeren Verteilerrädern (33), die über weitere Verteilerräder (33) mit einer größeren Anzahl von Abtriebsrädern (36) getriebetechnisch verbunden sind. Die Abtriebsräder (36), deren Mittellinien im Ausführungsbeispiel 32 mm voneinander entfernt sind, gehören zu pneumatisch ausfahrbaren Spindeln bzw. Pinolen (61).

In Figur 7, sie zeigt einen Querschnitt der Multifunktionseinheit, ist der Antriebsmotor (30) im Längsschnitt dargestellt. Der Antriebsmotor (30), z.B. ein Servomotor, hat einen Stator (44), der von einem flüssigkeitsgekühlten Kühlgehäuse (43) umgeben ist. Das Kühlgehäuse (43) ist ein rohrförmiger Kühlmantel (46), der mit seiner innenwandung auf der Außenwandung (45) des Stators (44) abgedichtet aufliegt. Im vorderen und hinteren Bereich hat der Kühlmantel (46) dazu jeweils zwei Umlaufnuten (48), in denen Dichtringe (49) angeordnet sind. Zwischen dem vorderen und hinteren Bereich ist in den Kühlmantel (46) eine schraubenförmlich gewundene Nut (47) eingearbeitet. Im Ausführungsbeispiel hat der Nutquerschnitt bei einer Tiefe von 6 mm eine Breite von 12 mm. Die nach innen offene Nut (47) wird durch die Außenwandung (45) des Stators (44) zu einem geschlossenen, durchströmbaren Kanal, sodass ein Wärmetauscher entsteht. In einem Ende der Nut (47) wird über den Grundkörper (20) ein flüssiges Kühlmittel, z.B. ein Wasser-Glykol-Gemisch, eingeleitet, um am anderen Ende der Nut (47) wieder über den Grundkörper (20) ausgeleitet zu werden. Um die Ein- und Ausleitstellen herum sind wiederum Dichtmittel angeordnet.

Der Wärmetauscher erbringt eine Kühlleistung von ca. 1 kW pro Antriebsmotor (30). Er sitzt in der Regel zusammen mit einer im Grundkörper (20) angeordneten Umwälzpumpe in einem Kühlkreislauf. Ggf. ist in den Kühlkreislauf zusätzlich ein aktives Kühlaggregat integriert.

Jede Pinole (61), vgl. Figur 7, endet im Bereich der Werkzeugseite (21) in einer eine Werkzeugaufnahme (62) tragenden Spindel, um dort beispielsweise als Werkzeug jeweils Bohrer oder Fräser aufzunehmen. Zumindest ein Teil der Spindeln hat einen Ausfahrhub von z.B. 60 mm. Die ausfahrbaren Werkzeuge befinden sich in ihrer Ruhestellung in einer versenkten Parkposition (75), vgl. Figur 2. Zum Bearbeiten eines Werkstückes (9) werden sie von dort aus in eine Arbeitsposition (76) einzeln oder gruppenweise ausgefahren. Unabhängig von der Park- oder der Arbeitsposition (75, 76) bleiben alle Zahnräder (32 - 36) permanent im Eingriff.

Innerhalb des Grundkörpers sitzen alle Zahnräder (32 - 36) in einer Ebene. Hierbei befindet sich jedes Zahnrad in einer zylindrischen Aussparung des Grundkörpers, die z.B. 1 bis 2 mm größer ist als der jeweilige Kopfkreisdurchmesser des dort angeordneten Zahnrades (32 - 36). Dadurch ergibt sich um die Zahnräder herum ein schmaler Spaltraum (38). Zugleich haben die Stirnseiten der Zahnräder gegenüber dem Grundkörper jeweils pro Seite nur einen Abstand von 0,2 - 0,4 mm. In den zusammenhängenden Spaltraum (38) münden im Grundkörper mehrere von außen zugängliche Schmierstoffzuführstellen. Über letztere wird der Spaltraum (38) teilweise mit Schmierfett befüllt. Während des Betriebs wird das Schmiermittel mittels der Zahnräder (32 - 36) permanent entlang des Getriebezugs gefördert.

Nach den Figuren 2 und 3 sind auf der Werkzeugseite (21) entlang der hinteren Seitenwandungen zum Beispiel 16 Pinolen (61) mit ausfahrbaren Spindeln angeordnet. Jede Spindel trägt z.B. einen Bohrer (52). Die Bohrer sind abwechselnd links und rechtsdrehend. Im Ausführungsbeispiel nach Figur 2 sind im mittleren Bereich vier Bohrer softwaretechnisch zu einer Gruppe zusammengefasst. Sie sind hier beispielsweise ausgefahren dargestellt. Im Bereich der gegenüberliegenden Seitenwandungen ist eine Gruppe von acht Pinolen mit eingespannten Spiralbohrern (52) dargestellt. Alle bisher beschriebenen Spiralbohrer (52) sind senkrecht zur Werkzeugseite (21) ausgerichtet. Zwischen den Spiralbohrern der Achtergruppe und der hinteren Stirnseite ist eine Sägescheibe (58) zur Herstellung der Aussparungen für Clamex-Verbinder gezeigt. Zwischen den Spiralbohrern der Achtergruppe und der Reihe der 16 Pinolen (61) ist ein ausfahrbarer Einfachwinkelkopf (63) angeordnet, der eine große Sägescheibe (54) lagert, deren Scheibenebene parallel zu den langen Seitenwandungen ausgerichtet ist. Zwischen dem Deckel (28) und der vorderen Stirnseite (23) sitzt im Grundkörper (20) versenkt ein Doppelwinkelkopf (65), der eine Sägescheibe (57) auf der einen Seite und auf beiden Seiten jeweils einen Spiralbohrer trägt. Die Rotationsachsen der Sägescheibe und der Spiralbohrer verlaufen parallel zur Werkzeugseite (21) und zu den langen Seitenwandungen (25).

Zwischen dem Deckel (28) und der vorderen langen Seitenwandung (25) sind zwei kleine parallel hintereinanderliegende Doppelwinkelköpfe (66) angeordnet. Beide Doppelwinkelköpfe (66) befinden sich in der Arbeitsposition (76). Jeder Doppelwinkelkopf (66) trägt beidseits je einen Spiralbohrer, der ebenfalls parallel zu der Werkzeugseite (21) und den langen Seitenwandungen (25) ausgerichtet ist. Auf der Ecke zwischen der vorderen Seitenwandung (25) und der vorderen Stirnseite (23) sitzen zwei weitere hintereinanderliegende Doppelwinkelköpfe (66). Diese befinden sich jedoch in der Parkposition (75).

Zwischen dem Doppelwinkelkopf (65) und der vorderen Stirnseite (23) sitzt in der Werkzeugseite (21) versenkt ein fügendes Werkzeug (70). Letzteres ist ein pneumatisch ausfahrbarer Andrückstempel (71), mit dessen Hilfe - beispielsweise während eines Bohrvorgangs - das plattenförmige Werkstück (9) gegen das Werkstückstützgatter (10) oder eine andere Stützvorrichtung gedrückt wird. Das Anpressen unter Kraftschluss und das anschließende Lösen erfolgt ohne Schädigung des jeweiligen Werkstücks (9).

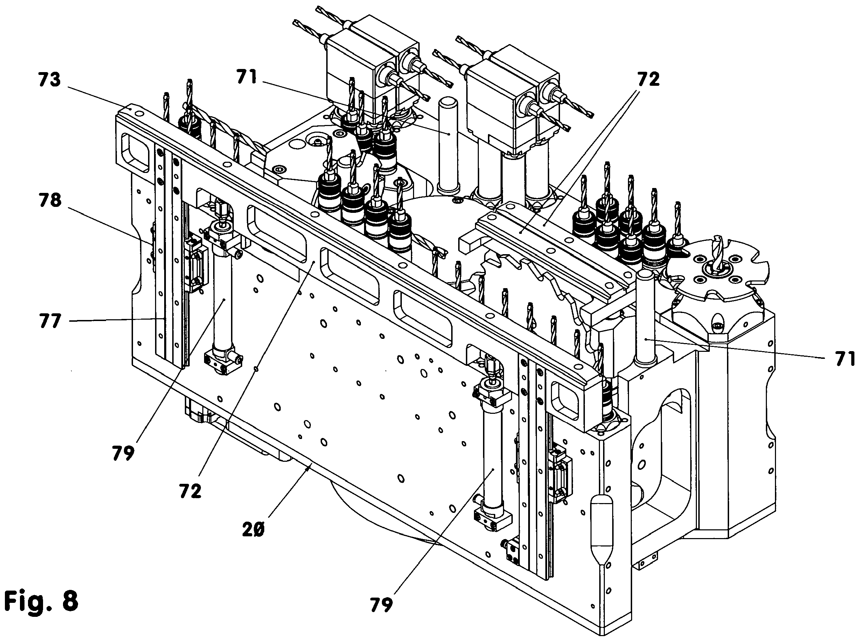

In Figur 8 sind neben den Andrückstempeln (71) auch mehrere Andrückleisten (72) zu sehen. Die als Niederhalter wirkenden Andrückleisten (72) sind beispielsweise lange Leisten, die ein- und ausfahrbar in der Multifunktionseinheit gelagert und geführt sind. Diese Andrückleisten (72), z.B. formsteife, verrippte und gewichtsoptimierte Balken, werden als gleitfähige Niederhalter verwendet. Sie werden eingesetzt, wenn das jeweilige Werkstück (9) mit einer Nut, einer Kerbe oder einer anderen langgestreckten Ausnehmung ausgestattet werden soll, deren Längsausdehnung in der Werkstücktransportrichtung liegt. Diese Ausnehmungen entstehen, indem zwischen der ortsfest positionierten Multifunktionseinheit und dem ortsfesten Werkstückstützgatter (10) - z.B. bei rotierender Sägescheibe (54) - das Werkstück (9) mit Hilfe der Werkstückwagen (6) in Werkstücktransportrichtung hindurchgezogen wird. Um nun - während des Säge- oder des Fräsvorgangs - ein Abheben des Werkstücks (9) vom Werkstückstützgatter (10) zu verhindern, werden die Andrückleisten (72), die hier z.B. beidseits der Sägescheibe (54) angeordnet sind, in Richtung des Werkstückstützgatters (10) pneumatisch ausgefahren.

Dazu sind die Andrückleisten (72) parallel zur Werkstücktransportrichtung orientiert. Zudem sind sie im Ausführungsbeispiel in Richtung der maximalen Längsausdehnung der Multifunktionseinheit ausgerichtet. Um reibungsarm und beschädigungsfrei entlang dem Werkstück (9) gleiten zu können, sind die Andrückleisten (72) mit einem entsprechenden Gleitbelag (73) ausgestattet, vgl. Figuren 7 und 8. Die vordere, an der großen Seitenwandung gelagerte Andrückleiste (72) ist an zwei Führungsschienen (77) befestigt, die von unten her senkrecht an dieser anliegen. Jede Führungsschiene (77) ist in mindestens einem am Grundkörper (20) angeordneten Kugelumlaufschuh (78) geführt. Parallel zur Führungsrichtung der Kugelumlaufschuhe (78) sind am Grundkörper (20) zwei Pneumatikzylinder (79) angeordnet. Die Kolbenstangen dieser Zylinder sind an der Andrückleiste (72) angelenkt. Die Andrückleisten (72) werden bei Bedarf gesteuert ausgefahren. Nach Abschluss der Säge- oder Fräsbearbeitung werden sie wieder in ihre Parkstellung zurückgefahren.

Unabhängig von den spanenden und/oder fügenden Werkzeugen können am Grundkörper (20) auch ein 1-D- oder 3-D-Mehrkoordinatentaster oder dergleichen angeordnet sein. Die Taster, die aus dem Grundkörper beispielsweise herausgefahren oder herausgeklappt werden können, dienen dem Ausrichten der Multifunktionseinheit gegenüber dem Werkstückstützgatter bzw. dem Maschinenbett. Dazu ist am Werkstückstützgatter oder dem Maschinenbett entsprechende Referenzgeometrie angeordnet, die durch die Taster zu Messwerken angefahren werden können.

Im oder am Grundkörper ist eine elektronische Wasserwaage und gegebenenfalls auch ein Beschleunigungssensor angeordnet, um unabhängig von den Steuerungsdaten der für die Handhabungsgeräte und die von diesen getragenen Multifunktionseinheiten zuständigen Steuerungen die Lage im dreidimensionalen Raum redundant kontrollieren zu können.

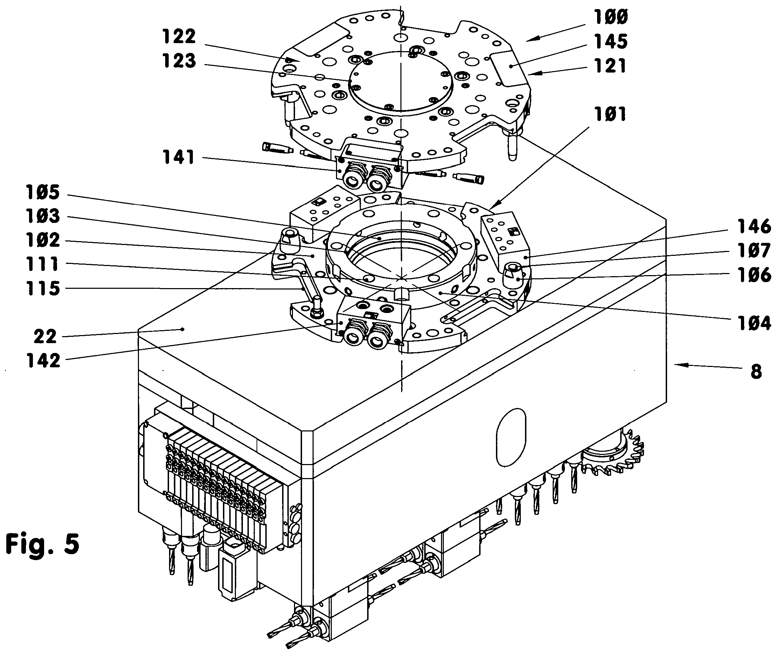

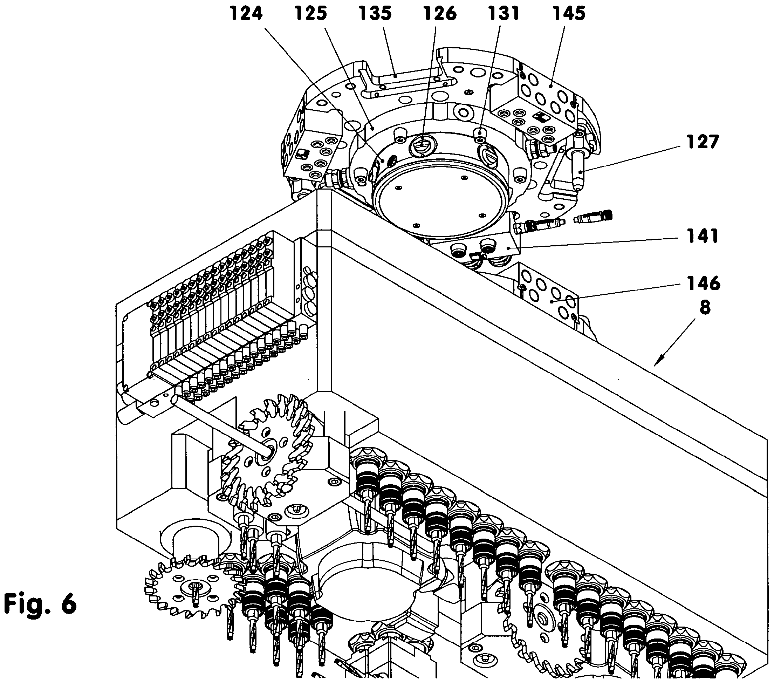

Die Figuren 5 und 6 zeigen ein Werkzeugschnittstellensystem mit einem grundkörperseitigen Adapter (101), einem sog. Werkzeugflansch, und einem Gegenadapter (121), einen sog. Roboterflansch, der beispielsweise an einem Handhabungsgerät (7) befestigt ist. Der Adapter (101) hat eine auf der Adapterseite (22) des Grundkörpers verschraubte Flanschplatte (102).

Auf der Flanschplatte (102) ist ein Flanschring (104) angeformt. Durch die Kombination aus Flanschplatte und Flanschring erstreckt sich eine Zentrierzentrumsbohrung (103). Die Innenwandung dieser Bohrung trägt eine Rastringnut (105). Außerhalb des Flanschringes (104) trägt die Flanschplatte (102) zwei weit auseinanderliegende Zentrieraufsatzhülsen. In der freien Stirnfläche des Flanschringes (104) sind sechs kegelstumpfmantelförmige Drehsperrausnehmungen (111) - äquidistant verteilt - angeordnet.

Das komplementäre Gegenstück zum Adapter (101) ist ein am Handhabungsgerät (7) angeordneter Gegenadapter (121). Nach Figur 5 weist die Rückseite seiner Flanschplatte (122) einen Zentrierzentrumsbund (123) auf, über den er am Handhabungsgerät zentriert ist. Auf seiner dem Adapter (101) zugewandten Seite, vergleiche Figur 6, erhebt sich auf der Flanschplatte ein großer zylindrischer Flanschzapfen (124), der im unteren Bereich von einem zylindrischen Zentrierzentrumsbund (123) umgeben ist. Der Flanschzapfen (124) trägt an seinem Umfang zum Beispiel sechs bewegliche Verriegelungsbolzen (126), die radial abstehen. Die Verriegelungsbolzen (126) sind beispielsweise pneumatisch in den Flanschzapfen (124) einsehbar. Das Verriegeln der Verriegelungsbolzen (126) erfolgt im Flanschzapfen beispielsweise mittels Luftdruck und/oder mittels Federkraft.

Um den Werkzeugflansch am Roboterflansch beim Ankurbeln vorzentrieren zu können, sind auf der Flanschplatte (122) - im Bereich des äußeren Randes - zusätzlich zwei Zentrierbolzen (127) angeordnet.

Auf der freien Stirnseite des gegenüber den Zentrierbolzen zurückgesetzten Zentrierzentrumsbunds (123) befinden sich z.B. sechs konische Drehsperrzapfen (131). Die Drehsperrzapfen sind gegenüber den Zentrierbolzen versetzt angeordnet.

Beim Ankuppeln des Adapters am Gegenadapter werden zunächst die Zentrierbolzen (127) in die Zentrierbohrungen (107) der Zentrieraufsatzhülsen (106) eingespurt bzw. vorzentriert. Nahezu zeitgleich taucht der Flanschzapfen (124) in die Zentrierzentrumsbohrung (103) ein. Dabei verrasten die Verriegelungsbolzen (126) in der Rastringnut (105) des Adapters, um die Multifunktionseinheit gegen das letzte Glied des jeweiligen Handhabungsgeräts (7) zu ziehen und zu verriegeln. Zudem tauchen die konischen Drehsperrzapfen (131) beim Ankuppeln in die Drehsperrausnehmungen (111) ein. Letztere verhindern ein Verdrehen des Adapters relativ zum Gegenadapter. Die Drehsperrzapfen sind bezüglich ihrer Anzahl und ihres Querschnittes so dimensioniert, dass sie die - um die Mittellinie der Werkzeugschnittstelle auftretenden - großen Lastmomente abstützen können.

Jeder Flansch (101, 121) weist beispielsweise sechs außenliegende Ausnehmungen (115, 135) auf, in denen jeweils ein Übertragungsmodul (141 - 146) anordenbar ist. Je zwei innerhalb des Werkzeugschnittstellensystems (100) sich gegenüberliegende Übertragungsmodule (141, 142; 145, 146) bilden ein ineinandersteckbares Übertragungsmodulpaar. Die in Figur 5 vorn liegenden Übertragungsmodule (141, 142) weisen an ihren einander zugeordneten Stirnflächen zwei nebeneinanderliegende 19 polige Steckverbinder auf. Das werkzeugseitige Übertragungsmodul (142) trägt z.B. die Stecker, während das roboterseitige Übertragungsmodul (141) die entsprechenden Steckbuchsen vorweist. Die beiden anderen Übertragungsmodule pro Flansch (101, 121) haben jeweils sechs Übergänge für die Druckluftübertragung.

Der Adapter (101) hat gegenüber der Adapterseite (22) eine Adapterfläche, die erheblich kleiner ist als die Gesamtfläche der Adapterseite (22). Die Größe der Adapterfläche beträgt 20 bis 30 Prozent der Gesamtfläche der Adapterseite (22).

Nach Figur 1 weist das Werkzeugschnittstellensystem (100) des rechts angeordneten Handhabungsgeräts (7) einen Distanzflansch (137) auf, der entweder zwischen der Adapterseite (22) der Multifunktionseinheit (8) und dem Adapter (101) oder zwischen dem letzten Glied des Handhabungsgeräts (7) und dem Gegenadapter (121) angeordnet ist. Der Distanzflansch (137) hat eine Länge, die beispielsweise in der Größenordnung der Höhe der Multifunktionseinheit liegt.

Des Weiteren befindet sich nach Figur 1 neben jedem Handhabungsgerät (7) eine Einheitsablagestelle (15). Auf den Einheitsablagestellen werden die Multifunktionseinheiten durch die Handhabungsgeräte zu Wartungs-, Austauschzwecken oder zum Werkzeugwechseln frei zugänglich abgelegt.

Kombinationen der in den Figuren gezeigten Ausführungsbeispiele sind denkbar.

### Bezugszeichenliste:

- 1: Maschinenbett
- 2: Werkstücktransportsystem
- 3: Transportschiene
- 4, 5: Drehscheiben, Umsetzer
- 6: Werkstückwagen
- 7: Handhabungsgeräte
- 8: Multifunktionseinheiten, werkzeugtragend
- 9: Werkstück, platten- und/oder brettartig

- 10: Werkstückstützgatter
- 11: Stützen
- 12: Anlehnplatten, Anlehnleisten
- 13: Bürstenreihen

- 15: Einheitsablagestellen

- 20: Grundkörper
- 21: Werkzeugseite
- 22: Adapterseite
- 23: Stirnseiten
- 25: Seitenwandungen, lang
- 28: Deckel für Motorschacht

- 30: Motor, Antriebsmotor, Antrieb, Servomotor
- 31: Getriebe
- 32: Hauptantriebsrad
- 33: Verteilerräder, Zwischenräder
- 35: Antriebswelle von (30)
- 36: Abtriebsräder

- 38: Spaltraum
- 41: Schaltmittel, pneumatisch; Ventilblöcke
- 42: Schaltmittel, elektrisch

- 43: Gehäuse von (30), Kühlgehäuse
- 44: Stator von (30)
- 45: Statoraußenwandung, zylindrisch
- 46: Kühlmantel
- 47: Nut, schraubenförmig gewunden
- 48: Umlaufnuten
- 49: Dichtringe, O-Ringe

- 50: Werkzeuge, trennend; Werkzeugtyp

- 51: Bohrwerkzeuge, Bohrer
- 52: Bohrer für Clamex-Verbinder
- 53: Fräswerkzeuge
- 54: Sägewerkzeuge, Sägescheibe, groß
- 57: Sägewerkzeuge, Sägescheibe, klein, horizontal; für Clamex-Verbinder
- 58: Sägewerkzeuge, Sägescheibe, klein, vertikal; für Clamex-Verbinder

- 60: Werkzeuge, fügend; Werkzeugtyp
- 61: Pinolen
- 62: Werkzeugaufnahme
- 63: Einfachwinkelkopf
- 65: Doppelwinkelkopf, groß
- 66: Doppelwinkelkopf, klein, zwei Stempel
- 67: Bohr- und Fräsgruppe
- 69: Kombiwerkzeug für Topfscharnierbefestigung

- 70: Werkzeug, fügend; Werkzeugtyp
- 71: Andrückstempel, ausfahrbar
- 72: Andrückleisten
- 73: Gleitbelag
- 75: Parkposition, eingefahren
- 76: Arbeitsposition, ausgefahren
- 77: Führungsschienen
- 78: Kugelumlaufschuhe, Führung
- 79: Zylinder-Kolben-Einheit, Pneumatikzylinder

- 100: Werkzeugschnittstellensystem
- 101: Adapter, grundkörperseitig; Werkzeugflansch, schnellwechselbare Schnittstelle, Flansch
- 102: Flanschplatte
- 103: Zentrierzentrumsbohrung
- 104: Flanschring
- 105: Rastringnut
- 106: Zentrieraufsatzhülsen
- 107: Zentrierbohrungen
- 111: Drehsperrausnehmung
- 115: Ausnehmungen für Übertragungsmodule

- 121: Gegenadapter, Roboterflansch, Adaptergegenstück, schnellwechselbare Schnittstelle, Flansch
- 122: Flanschplatte
- 123: Zentrierzentrumsbund
- 124: Flanschzapfen
- 125: Flanschringgegenstück
- 126: Verriegelungsbolzen
- 127: Zentrierbolzen

- 131: Drehsperrzapfen, konisch
- 135: Ausnehmungen für Übertragungsmodule
- 137: Distanzflansch

- 141: Übertragungsmodul, 19-polig für Signalübertragung, roboterseitig
- 142: Übertragungsmodul, 19-polig für Signalübertragung, werkzeugseitig
- 145: Übertragungsmodul, sechs Durchgänge für die Druckluftübertragung, roboterseitig
- 146: Übertragungsmodul, sechs Durchgänge für die Druckluftübertragung, werkzeugseitig

## Patentansprüche

1. Multifunktionseinheit bestehend aus einer Vielzahl von in einem Grundkörper (20) der Multifunktionseinheit eingebauten bewegbaren Werkzeugen (51-58, 71) mit mindestens einem zentralen Antrieb (30),
- wobei sich die Werkzeuge (51-58, 71) im Grundkörper entweder in einer eingefahrenen Parkposition (75) oder in einer ausgefahrenen Arbeitsposition (76) befinden,
**dadurch gekennzeichnet, dass** J die Werkzeuge (51-58, 71) verschiedene Typen (50, 70) für trennende und fügende Fertigungsverfahren darstellen,
- wobei von jedem Werkzeugtyp (50, 70) ein oder mehrere Werkzeuge (51-58, 71) vorhanden sind,
- wobei die Multifunktionseinheit dafür vorgesehen ist, dass mehrere Werkzeuge (51-58, 71), zu einer Gruppe mechanisch oder softwaretechnisch zusammengefasst,
- zeitgleich in eine Arbeitsposition (76) bringbar sind und
- wobei der Grundkörper (20) einen grundkörperseitigen Adapter (101) für ein Werkzeugschnittstellensystem (100) aufweist, über den die Massenkräfte der Multifunktionseinheit abgestützt sind und über den mindestens die Energie und die Datenkommunikation übertragbar ist.

2. Multifunktionseinheit gemäß Anspruch 1, **dadurch gekennzeichnet, dass** die verschiedenen Typen (50) für trennende Fertigungsverfahren mindestens Bohrwerkzeuge (51, 52), Fräswerkzeuge (53) und/oder Sägewerkzeuge (54, 57, 58) sind.

3. Multifunktionseinheit gemäß Anspruch 1, **dadurch gekennzeichnet, dass** der Grundkörper (20) eine quaderähnliche Form hat, wobei die Werkzeuge (51-58, 71) in derjenigen Seite des Grundkörpers (20) - der Werkzeugseite (21) - angeordnet sind, die gegenüber dem grundkörpertragenden Adapter (101) positioniert ist.

4. Multifunktionseinheit gemäß Anspruch 1, **dadurch gekennzeichnet, dass** der mindestens eine Antriebsmotor (30), das oder die Getriebe (31) und mindestens ein Teil der mechanischen, pneumatischen und/oder elektrischen Schaltmittel (41, 42) im Grundkörper (20) untergebracht sind.

5. Multifunktionseinheit gemäß Anspruch 1, **dadurch gekennzeichnet, dass** diese für ein fügendes Fertigungsverfahren mindestens einen aus der Werkzeugseite (21) des Grundkörpers (20) aus- und einfahrbaren Andrückstempel (71) aufweist.

6. Multifunktionseinheit gemäß Anspruch 1, **dadurch gekennzeichnet, dass** diese als Niederhalter mindestens eine normal zur Werkzeugseite (21) aus- und einfahrbare Andrückleiste (72) hat, die sich parallel zur Werkstücktransportrichtung erstreckt.

7. Multifunktionseinheit gemäß Anspruch 1, **dadurch gekennzeichnet, dass** der Adapter (101) und ein komplementärer Gegenadapter (121) eine schnellwechselbare Schnittstelle (100) bilden.

8. Multifunktionseinheit gemäß Anspruch 7, **dadurch gekennzeichnet, dass** am Gegenadapter (121) an seinem freien - dem Adapter (101) abgewandten - Ende ein Distanzflansch (137) angeordnet ist.

9. Multifunktionseinheit gemäß Anspruch 1, **dadurch gekennzeichnet, dass** der zentrale Antrieb (30) ein Elektromotor ist, der mit einem flüssigkeitskühlbaren Gehäuse (43) ausgestattet ist.

10. Multifunktionseinheit gemäß Anspruch 9, **dadurch gekennzeichnet, dass** das flüssigkeitskühlbare Gehäuse (43) aus einem den Stator (44) des Antriebs (30) umgebenden Kühlmantel (46) besteht, wobei der Kühlmantel (46) mindestens eine schraubenförmige Nut (47) zur Führung des Kühlmittels aufweist.

## Claims

1. Multifunction unit consisting of a plurality of movable tools (51-58, 71) installed in a base body (20) of the multifunction unit, with at least one central drive (30),
- wherein the tools (51-58, 71) in the base body are in either a retracted, parking position (75) or an extended, working position (76),
**characterized in that**
the tools (51-58, 71) represent various types (50, 70) for separating and joining manufacturing processes,
- wherein one or more tools (51-58, 71) from each tool type (50-70) are present,
- wherein the multifunction unit is designed such that multiple tools (51-58, 71), combined in a group mechanically or by software program, are able to be brought into a working position (76) simultaneously, and
- wherein the base body (20) has a base-side adapter (101) for a tool interface system (100), by which the mass forces of the multifunction unit are braced and via which at least the energy and data communication can be transferred.

2. Multifunctional unit according to Claim 1, **characterized in that** the various types (50) for separating manufacturing processes are at least drilling tools (51, 52), milling tools (53) and/or sawing tools (54, 57, 58).

3. Multifunctional unit according to Claim 1, **characterized in that** the base body (20) has a shape resembling a cuboid, wherein the tools (51-58, 71) are arranged in the side of the base body (20) - the tool side (21) - which is located opposite the adapter (101) that supports the base body.

4. Multifunctional unit according to Claim 1, **characterized in that** the at least one drive motor (30), the one or more gearbox (es) (31) and at least some of the mechanical, pneumatic and/or electrical switching means (41, 42) are accommodated in the base body (20).

5. Multifunctional unit according to Claim 1, **characterized in that** said multifunctional unit includes at least one pressure punch (71) for a joining manufacturing process which is extendable from and retractable into the tool side (21) of the base body (20) .

6. Multifunctional unit according to Claim 1, **characterized in that** said multifunctional unit includes at least one pressure bar (72) as a holding-down device which is extendable from and retractable normally to the tool side (21) and extends parallel to the workpiece transport direction.

7. Multifunctional unit according to Claim 1, **characterized in that** the adapter (101) and a complementary counter-adapter (121) form a quick-change interface (100).

8. Multifunctional unit according to Claim 7, **characterized in that** a spacer flange (137) is arranged on the free end of the counter-adapter (121) - the end farthest from the adapter (101).

9. Multifunctional unit according to Claim 1, **characterized in that** the central drive (30) is an electric motor equipped with a liquid-cooled housing (43) .

10. Multifunctional unit according to Claim 9, **characterized in that** the liquid-cooled housing (43) consists of a cooling jacket (46) that surrounds the stator (44) of the drive (30), wherein the cooling jacket (46) has at least one helical groove (47) for guiding the coolant.

## Revendications

1. Unité multifonctionnelle, constituée d'une pluralité d'outils (51-58, 71) mobiles, intégrés dans un corps de base (20) de l'unité multifonctionnelle, dotée d'au moins un entraînement (30) central,
- les outils (51-58, 71) se trouvant dans le corps de base, soit dans une position de rangement (75) rentrée ou dans une position de travail (76) sortie,
**caractérisée en ce que**
les outils (51-58, 71) correspondent à différents types (50, 70), destinés à des procédés d'usinage par séparation ou par assemblage,
- un ou plusieurs outils (51-58, 71) de chaque type d'outils (50, 70) étant présent(s),
- l'unité multifonctionnelle étant prévue pour que plusieurs outils (51-58, 71) rassemblés, par moyen mécanique ou logiciel en un groupe, soient susceptibles d'être amenés simultanément dans une position de travail (76), et
- le corps de base (20) comportant sur le côté du corps de base un adaptateur (101) pour un système d'interface d'outils (100), par l'intermédiaire duquel les masses de l'unité multifonctionnelle sont soutenues et par l'intermédiaire duquel au moins l'énergie et la communication de données est transmissible.

2. Unité multifonctionnelle selon la revendication 1, **caractérisée en ce que** les différents types (50) pour des procédés d'usinage par séparation sont au moins des outils d'alésage (51, 52), des outils de fraisage (53) et/ou des outils de sciage (54, 57, 58).

3. Unité multifonctionnelle selon la revendication 1, **caractérisée en ce que** le corps de base (20) a une forme parallélépipédique, les outils (51-58, 71) étant placés dans le côté du corps de base (20) - le côté (21) des outils - qui est positionné au vis-à-vis de l'adaptateur (101) portant le corps de base.

4. Unité multifonctionnelle selon la revendication 1, **caractérisée en ce que** l'au moins un moteur d'entraînement (30), la ou les transmissions (31) et au moins une partie des moyens de commutation (41, 42) mécaniques, pneumatiques et/ou électriques sont logés dans le corps de base (20).

5. Unité multifonctionnelle selon la revendication 1, **caractérisée en ce que** pour un procédé d'usinage par assemblage, celle-ci comporte au moins un poinçon de pression (71), susceptible d'être déplacé vers l'extérieur et vers l'intérieur du côté outils (21) du corps de base (20).

6. Unité multifonctionnelle selon la revendication 1, **caractérisée en ce que** sous la forme d'un serre-flanc, celle-ci détient au moins une baguette de pression (72), susceptible d'être déplacée vers l'extérieur et vers l'intérieur, à la normale du côté outils (21), qui s'étend à la parallèle de la direction de transport de la pièce à usiner.

7. Unité multifonctionnelle selon la revendication 1, **caractérisée en ce que** l'adaptateur (101) et un adaptateur antagoniste (121) complémentaire forment une interface (100) à changement rapide.

8. Unité multifonctionnelle selon la revendication 7, **caractérisée en ce que** sur l'adaptateur (121) antagoniste, sur son extrémité libre - opposée à l'adaptateur (101) - est placée une bride d'espacement (137).

9. Unité multifonctionnelle selon la revendication 1, **caractérisée en ce que** l'entraînement (30) central est un moteur électrique, qui est équipé d'un carter (43), susceptible d'être refroidi par liquide.

10. Unité multifonctionnelle selon la revendication 9, **caractérisée en ce que** le carter (43) susceptible d'être refroidi par moteur consiste dans une enveloppe de refroidissement (46) entourant le stator (44) de l'entraînement (30), l'enveloppe de refroidissement (46) comportant au moins une rainure (47) de forme hélicoïdale, destinée à conduire l'agent réfrigérant.
